(19) Europäisches Patentamt
European Patent Office
Office européen des brevets

(11) **EP 2 956 418 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(21) Anmeldenummer: **14705732.7**

(22) Anmeldetag: **07.02.2014**

(51) Int Cl.:
**C03B 19/14** (2006.01)

(86) Internationale Anmeldenummer:
**PCT/EP2014/052450**

(87) Internationale Veröffentlichungsnummer:
**WO 2014/124877 (21.08.2014 Gazette 2014/34)**

(54) **VERFAHREN ZUR HERSTELLUNG VON TITAN-DOTIERTEM SYNTHETISCHEN QUARZGLAS**

METHOD FOR PRODUCING TITANIUM-DOPED SYNTHETIC QUARTZ GLASS

PROCÉDÉ DE FABRICATION DE VERRE DE QUARTZ SYNTHÉTIQUE DOPÉ AU TITANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2013 DE 102013202256**

(43) Veröffentlichungstag der Anmeldung:
**23.12.2015 Patentblatt 2015/52**

(73) Patentinhaber: **Heraeus Quarzglas GmbH & Co. KG**
**63450 Hanau (DE)**

(72) Erfinder:
• **FABIAN, Heinz**
**63762 Großostheim (DE)**
• **THOMAS, Stephan**
**63538 Großkrotzenburg (DE)**

(74) Vertreter: **Heraeus IP**
**Heraeus Holding GmbH**
**Schutzrechte**
**Heraeusstraße 12-14**
**63450 Hanau (DE)**

(56) Entgegenhaltungen:
**WO-A1-01/92172      WO-A1-99/54259**
**WO-A1-2004/065314   WO-A1-2013/076195**
**US-A- 5 043 002     US-A- 5 879 649**
**US-A- 5 970 751**

**Beschreibung**

Die Erfindung betrifft ein Verfahren zur Herstellung von Titan-dotiertem synthetischen Quarzglas.

Stand der Technik

Zur Herstellung von synthetischem Quarzglas für kommerzielle Anwendungen werden aus einer siliziumhaltigen Ausgangssubstanz in einem CVD-Verfahren (chemische Gasphasenabscheidung) durch Hydrolyse und/oder Oxidation $SiO_2$-Partikel erzeugt und diese auf einem Träger niedergeschlagen. Dabei kann zwischen Außenabscheideverfahren und Innenabscheideverfahren unterschieden werden. Bei den Außenabscheideverfahren werden $SiO_2$-Partikel auf der Außenseite eines rotierenden Trägers aufgebracht. Als Beispiele seien das so genannte OVD-Verfahren (outside vapour phase deposition), das VAD-Verfahren (vapour phase axial deposition) oder das PECVD-Verfahren (plasma enhanced chemical vapour deposition) genannt. Als bekanntestes Beispiel für ein Innenabscheideverfahren steht das MCVD-Verfahren (modified chemical vapour deposition), bei dem auf der Innenwandung eines von außen erhitzten Rohres $SiO_2$-Partikel abgeschieden werden. Es sein an dieser Stelle darauf hingewiesen, dass die einfache Schreibweise für chemische Verbindungen (z.B. "SiO2") und die Summenformel (z.B. "$SiO_2$") als gleichbedeutend angesehen und parallel verwendet werden.

In der EUV-Lithografie (Extreme Ultraviolet) werden als Substratmaterialien für die dabei verwendeten reflektierenden Optiken und Masken Werkstoffe benötigt, die im Temperaturbereich zwischen 20°C und 50°C nur eine sehr geringe bis zu keiner merklichen thermische Ausdehnung aufweisen. Diese Anforderung kann mit Titanoxid dotiertem Quarzglas erfüllt werden. Ein Verfahren zur Herstellung von solchem Titan-dotierten synthetischen Quarzglas (auch häufig als ULE-Glas bezeichnet) ist in der US 5 970 751 A beschrieben.

In der Patentschrift US 5 970 751 A wird die Nutzung von Polyalkylsiloxane (auch kurz als "Siloxane" bezeichnet) zur Herstellung von Titanoxid dotiertem Quarzglas beschrieben. In der folgenden Beschreibung der Erfindung wird Titanoxid dotiertem Quarzglas auch als Titan-dotiertes Quarzglas bezeichnet.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt. Die Stoffgruppe der Siloxane lässt sich unterteilen in offenkettige Polyalkylsiloxane und in geschlossenkettige Polyalkylsiloxane. Die Polyalkylsiloxane haben folgende allgemeine Summenformel $Si_pO_p(R)_{2P}$, wobei P eine ganze Zahl $\geq$ 2 ist. Der Rest "R" ist eine Alkylgruppe, im einfachsten Fall eine Methylgruppe. Wegen der großtechnischen Verfügbarkeit in hoher Reinheit wird derzeit Octamethylcyclotetrasiloxan (OMCTS) bevorzugt eingesetzt. Diese Substanz wird gemäß einer von General Electric Inc. eingeführten Notation auch als "D4" bezeichnet, wobei "D" die Gruppe $[(CH_3)_2Si]$-0-repräsentiert.

Für die Reindarstellung von D4 ist wegen der relativ hohen Siedetemperatur und der chemischen Ähnlichkeit zu anderen Polyalkylcyclosiloxanen wie Hexamethylcyclotrisiloxan (D3), Dekamethylcyclopentasiloxan (D5), Dodekamethylcyclohexasiloxan (D6) und Tetradekamethylcycloheptasiloxan (D7) jedoch eine zeit- und kostenaufwändige Destillationsprozedur erforderlich. In diesem Zusammenhang sei auf die US 5,879,649 A verwiesen. Weitere Verfahrensaspekte zur Herstellung von Si02 Quarzglas aus Polyalkysiloxanen sind in der WO 2013/076195 A1 offenbart.

Die WO 99/54259 A1 offenbart ein Verfahren zur Herstellung von Titan-dotierten synthetischem Quarzglas mittels eines Abscheideverfahrens.

Die im Stand der Technik aufgeführten Herstellungsverfahren führen bei großvolumigen, zylinderförmigen Sootkörpern mit Außendurchmessern von mehr als 300 mm zu Material-Inhomogenitäten u. a. in Form axialer, radialer oder azimutaler Variationen der Hydroxylgruppen- oder Titan-Konzentration oder der Viskositätswerte.

Es ist die Aufgabe der vorliegenden Erfindung, ein Verfahren zur Herstellung von $SiO_2$-Sootkörpern für Titan-dotiertes synthetisches Quarzglas mit hoher Materialhomogenität zu schaffen, bei dem die genannten Nachteile vermieden werden, insbesondere, ein Verfahren bereitzustellen, dass die Herstellung von $SiO_2$-TiO2-Sootkörpern mit hoher Materialhomogenität ermöglicht, insbesondere bei großvolumigen, zylinderförmigen Sootkörpern **Geänderte Beschreibung zur europäischen Patentanmeldung Nr.** 14 705 732.7 mit Außendurchmessern von mehr als 300 mm für Titan-dotiertes synthetisches Quarzglas.

Allgemeine Beschreibung der Erfindung

Zur Lösung dieser Aufgabe wird ein Verfahren mit den Merkmalen des Patentanspruchs 1 vorgeschlagen. In den abhängigen Ansprüchen sind jeweils bevorzugte Weiterbildungen aufgeführt.

Die Erfindung betrifft ein Verfahren zur Herstellung von Titan-dotiertem synthetischen Quarzglas, umfassend die Verfahrensschritte:

(A) Bereitstellen eines flüssigen $SiO_2$-Einsatzmaterials, welches mehr als 60 Gew.% des Polyalkylsiloxanes D4 aufweist,

(B) Verdampfen des flüssigen $SiO_2$-Einsatzmaterials in einen gasförmigen $SiO_2$ Einsatzdampf,

(C) Verdampfen eines flüssigen $TiO_2$-Einsatzmaterials in einen gasförmigen $TiO_2$-Einsatzdampf,

(D) Umsetzen des $SiO_2$-Einsatzdampfes und des $TiO_2$-Einsatzdampfes zu $SiO_2$-Partikeln und $TiO_2$-Partikeln,

(E) Abscheiden der SiO$_2$-Partikel und der TiO$_2$-Partikel auf einer Ablagerungsfläche unter Bildung eines Titan-dotierten SiO$_2$ Sootkörpers,

(F) Verglasen des Titan-dotierten SiO$_2$-Sootkörpers unter Bildung des synthetischen Quarzglases, wobei die TiO$_2$-Konzentration in dem synthetischen Quarzglases zwischen 5 Gew.% und 11 Gew.% beträgt.

Erfindungsgemäß ist vorgesehen, dass das flüssige SiO$_2$-Einsatzmaterial wenigstens eine Zusatzkomponente aus dem Polyalkylsiloxan D3 mit einem Gewichtsanteil mD3 und eine Zusatzkomponente aus dem Polyalkylsiloxan D5 mit einem Gewichtsanteil mD5 in einem Gewichtsverhältnis mD3/mD5 in einem Bereich zwischen 0,01 und 1 aufweist, und das bereitgestellte, flüssige SiO$_2$-Einsatzmaterial unter Beibehaltung des Gewichtsverhältnis mD3/mD5 und zu mindestens 99 Gew.% in den gasförmigen SiO$_2$-Einsatzdampf verdampft wird, und

das bereitgestellte, flüssige SiO$_2$-Einsatzmaterial (105) unter Beibehaltung des Gewichtsverhältnis mD3/mD5 und zu mindestens 99 Gew.% in den gasförmigen SiO$_2$-Einsatzdampf (107) verdampft wird, und

die Zusatzkomponenten Polyalkylcyclosiloxane und jeweils deren lineare Homologen in folgenden Mengen umfassen:

- Hexamethylcyclotrisiloxan (D3): Gewichtsanteil mD3 im Bereich zwischen 0,02 Gew.% und 2 Gew.%,
- Dekamethylcyclopentasiloxan (D5) Gewichtsanteil mD5 im Bereich zwischen 0,5 Gew.% bis 10 Gew.%.

Im Unterschied zu den bekannten Verfahren, bei denen ein Einsatzmaterial eingesetzt wird, das aus einer einzigen, möglichst reinen und definierten Siliziumverbindung besteht,

wird erfindungsgemäß ein SiO$_2$-Einsatzmaterial vorgeschlagen, das als Gemisch unterschiedlicher Polyalkylsiloxane vorliegt. Octamethylcyclotetrasiloxan (hier auch als D4 bezeichnet) bildet die Hauptkomponente des Gemischs. Zusätzlich zu D4 sind chemisch ähnliche Polyalkylsiloxane im Gemisch enthalten, und zwar solche, mit geringerer Molekülmasse als D4 (darunter D3), als auch solche mit höherer Molekülmasse als D4 (darunter D5). Die unter dem Begriff "Zusatzkomponenten" zusammengefassten zusätzlichen Bestandteile des Einsatzmaterials haben somit Molekülmassen und Siedetemperaturen, die sich sowohl nach oben als auch nach unten von der relativen Molekülmasse von D4 (etwa 297 g/mol) und in der Siedetemperatur von D4 (etwa 175°C) unterscheiden.

Im Kern zeichnet sich das erfindungsgemäße Verfahren durch drei zusammenwirkende Merkmale aus. Das erste Merkmal beinhaltet, dass das flüssige SiO$_2$-Einsatzmaterial - im Folgenden auch als Einsatzmaterial bezeichnet - neben dem vorrangig vorhandenen D4 noch zwei weitere Polyalkylsiloxane aufweist. Es handelt sich dabei um die Zusatzkomponenten D3 und D5. Das Verhältnis der Anteile von D3 und D5 in dem flüssigen SiO$_2$-Einsatzmaterial ist nicht willkürlich, sondern in einem vordefinierten Intervall gewählt. Im Rahmen des zweiten wesentlichen Merkmales fordert das erfindungsgemäße Verfahren eine vollständige Überführung des flüssigen SiO$_2$-Einsatzmaterials - und damit auch der Gewichtsanteil mD3 und mD5 - in die Gasphase. Somit weist nicht nur die Flüssigkeit ein vorbestimmtes und eng eingegrenztes Verhältnis von D3 und D5 auf, sondern auch der gasförmige SiO$_2$-Einsatzdampf - im Folgenden auch als Einsatzdampf bezeichnet.

Das dritte Merkmal beinhaltet die Nutzung eines TiO2-Einsatzmaterials - im Folgenden auch als Dotierungsmaterial bezeichnet. Mittels des erfindungsgemäßen Verfahrens können SiO$_2$-Sootkörper und EUV-Quarzglaskörper erstellt werden, die eine besonders hohe Materialhomogenität und TiO2-Homogenität aufweisen, welche den zurzeit gängigen Standard überschreiten.

Im Rahmen der Erfindung beschreibt der Begriff "Gewichtsanteil" eine relative Größe, die sich aus der Masse der jeweiligen Zusatzkomponente im Verhältnis zur Gesamtmasse des flüssigen SiO$_2$-Einsatzmaterials ergibt. Das Gewichtsverhältnis mD3/mD5 der beiden Gewichtsanteile der Zusatzkomponente ist somit eine dimensionslose Größe, die sich durch Division der beiden relativen Gewichtsanteile bestimmen lässt.

Im Rahmen der Erfindung beschreibt der Begriff Taupunkt die Temperatur, bei der sich ein Gleichgewichtszustand von kondensierender und verdunstender Flüssigkeit einstellt.

Im Rahmen der Erfindung bedeutet die Aussage, dass die Verdampfung "unter Beibehaltung des Gewichtsverhältnisses" erfolgt, dass ein Verhältnis $\tau$ des Gewichtsverhältnis G_liquid = mD3/mD5 des flüssigen SiO$_2$-Einsatzmaterials und des Gewichtsverhältnis G_vapor = mD3/mD5 des gasförmigen SiO$_2$-Einsatzdampfes eine Größe von maximal ± 500 parts per million (im Folgende ppm; zu Deutsch "Teile von einer Million"), bevorzugt maximal ± 250 ppm, besonders bevorzugt maximal ± 100 ppm, insbesondere maximal ± 50 ppm aufweist. Dabei wird das Verhältnis $\tau$ wie folgt berechnet:

$$\tau = (G\_liquid - G\_vapor)/G\_liquid.$$

Folglich sollte das Gewichtsverhältnis, also das Verhältnis des Anteiles D3 zum Anteil D5 nicht durch die Verdampfung derart geändert werden, dass das Verhältnis um mehr als maximal ± 500 ppm, bevorzugt maximal ± 250 ppm, besonders bevorzugt maximal ± 100 ppm verschoben wird.

Im Rahmen der Erfindung bedeutet die Aussage, dass SiO2-Partikel und TiO2-Partikel abgeschieden werden, ein gemeinsames, insbesondere stofflich verbundenes Abscheiden von SiO2-TiO2-Partikeln. Es ist dem Fachmann klar, dass nicht reine SiO2-Partikel und reine TiO2-Partikel getrennt gebildet und abgelagert werden. Vielmehr bilden sich in der Flamme Si02-Primär-artikel, welche eine TiO2-Dotierung aufweisen. Aus diesem Si02-Primärpartikeln formen sich -noch in der Flamme - mit Ti02 versetzte Si02-Agglomerate.

Im Rahmen der Erfindung bedeutet die Aussage, dass "das flüssige $SiO_2$-Einsatzmaterial zumindest 99 Gewichtsprozent in den gasförmigen $SiO_2$-Einsatzdampf verdampft" wird, dass mindestens 99 Gewichtsprozent des in den Verdampfungsprozess einlaufenden flüssigen $SiO_2$-Einsatzmaterial auch in die Gasphase überführt werden. Es ist Ziel des erfindungsgemäßen Verfahrens, dass eine vollständige Umsetzung des flüssigen Einsatzmaterials in die Gasphase erfolgt. Der so erzielte gasförmige $SiO_2$-Einsatzdampf soll dann mittels Oxidation und/oder Pyrolyse und/oder Hydrolyse zu $SiO_2$-Partikeln umgesetzt werden. Durch die Bemühung, eine vollständige - also zu mindestens 99 Gewichtsprozent (auch als Gew.% bezeichnet) - Umsetzung des Einsatzmaterials in den Einsatzdampf zu erreichen, wird auch das Gewichtsverhältnis von D3 zu D5 aus der flüssigen Phase in die Gasphase übertragen. Diese Anstrengungen stellen sicher, dass der $SiO_2$-Einsatzdampf ein vorgegebenes Verhältnis zwischen D3 und D5 aufweist. Denn nur wenn das Gewichtsverhältnis mD3/mD5 in einem vorbestimmten Intervall liegt, ist es möglich $SiO_2$-Sootkörper und damit Quarzglas zu erzeugen, welche sich durch eine besondere Homogenität auszeichnen. Ein willkürlich gemischtes Polyalkylsiloxan-Gemisch, welches Gewichtsanteile von D3 und D5 aufweist, die von dem beanspruchten Bereich abweichen, ermöglicht nicht die Herstellung von Quarzglas mit solcherart herausgehobener Homogenität. Eine besonders bevorzugt Ausführungsvariante zeichnet sich dadurch aus, dass flüssiges $SiO_2$-Einsatzmaterial bis auf einen verbleibenden Anteil von weniger als 20 ppm, bevorzugt weniger als 10 ppm, besonders bevorzugt weniger als 5 ppm, in den $SiO_2$-Einsatzdampf überführt wird. Diese Ausführungsvariante kann mittels der hier offenbarten Verdampfungsverfahren realisiert werden. Diese Verdampfungsverfahren - insbesondere die Kombination der Verdampfung in Folge eines Druckabfalls und einer Senkung des Taupunktes - ermöglichen es, dass von dem flüssig in den Verdampfer eingebrachten $SiO_2$-Einsatzmaterial nur sehr geringe Anteile (weniger als 20 ppm, bevorzugt weniger als 10 ppm, besonders bevorzugt weniger als 5 ppm) nicht verdampfen. In einzelnen Versuchen konnte der Anteil an nicht verdampftem $SiO_2$-Einsatzmaterial sogar auf weniger als 2,5 ppm reduziert werden.

Im Rahmen der Erfindung bedeutet die Aussage, dass "das flüssige $TiO_2$-Einsatzmaterial zumindest 99 Gewichtsprozent in den gasförmigen $TiO_2$-Einsatzdampf verdampft" wird, dass mindestens 99 Gewichtsprozent des in den Verdampfungsprozess einlaufenden flüssigen $TiO_2$-Einsatzmaterial auch in die Gasphase überführt werden. Es ist Ziel des erfindungsgemäßen Verfahrens, dass eine vollständige Umsetzung des flüssigen Ti02-Einsatzmaterials in die Gasphase erfolgt. Der so erzielte gasförmige $TiO_2$-Einsatzdampf soll dann mittels Oxidation und/oder Pyrolyse und/oder Hydrolyse zu $TiO_2$-Partikeln umgesetzt werden. Eine besonders bevorzugt Ausführungsvariante zeichnet sich dadurch aus, dass flüssiges $TiO_2$-Einsatzmaterial bis auf einen verbleibenden Anteil von weniger als 20 ppm, bevorzugt weniger als 10 ppm, besonders bevorzugt weniger als 5 ppm, in den $TiO_2$-Einsatzdampf überführt wird. Diese Ausführungsvariante kann mittels der hier offenbarten Verdampfungsverfahren realisiert werden. Diese Verdampfungsverfahren - insbesondere die Kombination der Verdampfung in Folge eines Druckabfalls und einer Senkung des Taupunktes - ermöglichen es, dass von dem flüssig in den Verdampfer eingebrachten $TiO_2$-Einsatzmaterial nur sehr geringe Anteile (weniger als 20 ppm, bevorzugt weniger als 10 ppm, besonders bevorzugt weniger als 5 ppm) nicht verdampfen.

Im Rahmen der Erfindung umfasst der Begriff Polyalkylsiloxan sowohl lineare als auch zyklische Molekularstrukturen. Allerdings ist es bevorzugt, wenn die Polyalkylsiloxane des $SiO_2$-Einsatzmaterials mindestens drei Polymethylcyclosiloxane aufweisen, ausgewählt aus der Gruppe Hexamethylcyclotrisiloxan (D3), Octamethylcyclotetrasiloxan (D4), Decamethylcyclopentasiloxan (D5), Dodecamethylcyclohexasiloxan (D6). Die Notation D3, D4, D5 entstammt einer von General Electric Inc. eingeführten Notation, bei der "D" die Gruppe $[(CH_3)_2Si]$-0- repräsentiert. In einer bevorzugten Variante ist die Hauptkomponente der Polyalkylsiloxan Basissubstanz D4. So ist der Anteil an D4 der Polyalkylsiloxan Basissubstanz mindestens 70 Gew.%, insbesondere mindestens 80 Gew.%, bevorzugt mindestens 90 Gew.%, besonders bevorzugt mindestens 94 Gew.%.

Im Rahmen der Erfindung werden die Begriffe Verdünnungsmittel und Trägergas gleichbedeutend verwendet.

Eine Ausgestaltung des Verfahrens zeichnet sich dadurch aus, dass das Verhältnis mD3/mD5 im Bereich zwischen 0,1 und 0,5 liegt. Die durchgeführten Messungen haben überraschenderweise bestätigt, dass nur in einem vergleichsweise schmalen Bereich die Beifügung von D3 und D5 zu dem hauptsächlich aus D4 aufgebauten $SiO_2$-Einsatzmaterial eine signifikante Reduktion der Inhomogenitäten in der Dichte des Titan-dotierten synthetischen Quarzglases erzielt. Bei mehreren Messungen konnte festgestellt werden, dass insbesondere bei einem Verhältnis der Massen der Zusatzkomponenten mD3 zu mD5 zwischen 0,1 und 0,5 der Sootkörper und damit auch das daraus hergestellte Titan-dotierte Quarzglas besonders wenig Inhomogenitäten aufwiesen.

Wesentlich beim erfindungsgemäßen Verfahren ist, dass im $SiO_2$-Einsatzmaterial sowohl mindestens eine Zusatzkomponente mit kleinerer relativer Molekülmasse als D4 enthalten ist, als auch mindestens eine Zusatzkomponente mit größerer relativer Molekülmasse. Es wird davon ausgegangen, dass bei der hydrolytischen oder pyrolytischen Zersetzung der Polyalkylsiloxane die Aktivierungsenergie des oxidativen Angriffs beziehungsweise die zur Spaltung notwendige thermische Energie mit steigender Molekülmasse zunimmt. Das mit Zusatzkomponenten angereicherte $SiO_2$-Einsatzmaterial wird einer Reaktionszone in gasförmiger Form zugeführt und dabei durch Oxidation und/oder Hydrolyse und/oder Pyrolyse zu $SiO_2$ zersetzt. Die Reaktionszone ist beispielsweise eine Brennerflamme oder ein Plasma. In der Reaktionszone wird das Polyalkylsiloxan-Molekül schrittweise zu $SiO_2$ oxidativ abgebaut, wobei ein $SiO_2$-Primärpartikel entsteht, an das weitere SiO- oder $SiO_2$-Moleküle aus der Gasphase angelagert werden. Der Anlagerungsprozess endet auf dem Weg durch die Reaktionszone in Richtung auf einer Ablagerungsfläche, sobald das agglomerierte oder aggregierte $SiO_2$-Partikel in eine Zone eintritt, in der keine weiteren unzersetzten Moleküle mehr zur Verfügung stehen.

Diese Spaltungs-, Oxidations- und Anlagerungsprozesse (im Folgenden auch unter dem Begriff "Partikelbildungsprozess" zusammen gefasst) verlaufen je nach Molekülmasse und Größe des Polyalkylsiloxan-Moleküls mit unterschiedlicher Kinetik und unterschiedlichen Temperaturen. Als Folge davon werden in der Reaktionszone Agglomerate und Aggregate unterschiedlicher Größe mit vergleichsweise breiter Partikelgrößenverteilung gebildet. Bei der Nutzung des erfindungsgemäßen Verfahrens verändert sich der Partikelbildungsprozess. Im Vergleich zur Verwendung von reinem D4 ist eine breitere Verteilung der Größen der sich bildenden $SiO_2$-Partikel und damit einhergehend eine Veränderung im Sootkörperaufbau zu beobachten. Eine mögliche Erklärung für die Verbreiterung der Partikelgrößenverteilung ist die, dass sich aufgrund der unterschiedlichen Gasphasenkinetik auch eine unterschiedliche Kinetik in Bezug auf die Bildung von $SiO_2$-Primärpartikeln ergibt, an denen weiteres Wachstum durch Anlagerung weiterer $SiO_2$-Moleküle aus der Gasphase stattfinden kann. Eine andere mögliche Erklärung ist, dass sich bei der Hydrolyse oder Pyrolyse in Abhängigkeit von der Anzahl und Konfiguration der Siliziumatome des Polyalkylsiloxan-Moleküls bereits die Größe der $SiO_2$-Primärpartikel und damit einhergehend auch die Größe der daraus entstehenden $SiO_2$-Partikel und deren Konzentration in der Reaktionszone ändert.

Das erfindungsgemäße Verfahren beinhaltet zwei zentrale Forderungen. Zum einen muss das bereitgestellte flüssige $SiO_2$-Einsatzmaterial zu mindestens 99 Gew.% in die Gasphase überführt werden. Zum anderen muss diese Verdampfung derart ausgestaltet sein, dass das $SiO_2$-Einsatzmaterial unter Beibehaltung des Gewichtsverhältnisses mD3 zu mD5 verdampft. Erfindungsgemäß soll also das Massenverhältnis der beiden Zusatzkomponenten sowohl in der flüssigen als auch in der Gasphase im Wesentlichen übereinstimmen. Dabei hat es sich als vorteilhaft herausgestellt, wenn ein Verhältnis $\tau$ des Gewichtsverhältnis G_liquid=mD3/mD5 des flüssigen $SiO_2$-Einsatzmaterials und des Gewichtsverhältnis G_vapor =mD3/mD5 des gasförmigen $SiO_2$- Einsatzdampfs eine Größe von maximal $\pm$ 500 ppm, bevorzugt maximal $\pm$ 250 ppm, besonders bevorzugt maximal $\pm$ 100 ppm aufweist, wobei das Verhältnis wie folgt berechnet wird: $\tau$ = (G_liquid - G_vapor)/G_liquid. Es zeigte sich, dass durch das Hinzufügen zweier weiterer Polyalkylsiloxane D3 und D5 zu der Hauptkomponente D4 des $SiO_2$-Einsatzmaterials eine Verbreiterung der Partikelgrößenverteilung erreicht wird.

Im Rahmen einer Ausführungsvariante der Erfindung ist es vorgesehen, dass das flüssige Si02-Einsatzmaterial vollständig in den gasförmigen Si02-Einsatzdampf überführt wird. Bei den bekannten Verdampfungssystemen wird die zu verdampfende Flüssigkeit mit einer heißen Oberfläche in Kontakt gebracht. Die Oberflächen in Verdampfern können die Stabilität des Si02 Einsatzmaterials beeinflussen. Um diese Nachteile zu überwinden, ergibt sich eine weitere vorteilhafte Ausgestaltung des erfindungsgemäßen Verdampfungsprozesses dadurch, dass das Verdampfen die Schritte umfasst:

- Erhitzen des Si02-Einsatzmaterials,
- Einführen des erhitzten Si02-Einsatzmaterials in eine Expansionskammer, so dass zumindest ein erster Teil des Si02-Einsatzmaterials in Folge eines Druckabfalls verdampft.

Im Rahmen dieser Ausgestaltung findet eine Erhitzung des Si02-Einsatzmaterials statt. Dabei werden Temperaturen des Si02-Einsatzmaterials zwischen 150 und 230°C angestrebt. Als besonders schonend für das Si02-Einsatzmaterial hat es sich herausgestellt, wenn diese Verdampfung in Folge eines Druckabfalles geschieht. Dazu kann beispielsweise das Si02-Einsatzmaterial als eine überkritische Flüssigkeit erhitzt werden. Nur durch einen entsprechenden Druck innerhalb der Aufheizvorrichtung wird ein Sieden des Si02-Einsatzmaterials verhindert. Bei der Expansion innerhalb der Expansionskammer entspannt sich das Si02-Einsatzmaterial derart, dass es in die Gasphase übergeht. Als vorteilhaft haben sich Druckabfälle zwischen 1,8 und 5 bar herausgestellt.

Eine weitere vorteilhafte Ausgestaltung des erfindungsgemäßen Verdampfungsprozesses ergibt sich dadurch, dass das Verdampfen die Schritte umfasst:

- Erhitzen des Si02- Einsatzmaterials,
- Einführen des erhitzten SiO2- Einsatzmaterials in die Expansionskammer,
- Vermischen des SiO2-Einsatzmaterials mit einem erhitzten Verdünnungsmittel, so dass zumindest ein zweiter Teil Si02-Einsatzmaterials in Folge einer Senkung des Taupunktes verdampft.

Im Rahmen dieser Ausführungsvariante wird zur Verdampfung des Einsatzmaterials ein Verdünnungsmittel genutzt. Vorteilhafterweise handelt es sich bei dem Verdünnungsmittel um ein Trägergas, welches die Expansionskammer durchströmt. Aus diesem Grund wird im Folgenden der Begriff Verdünnungsgas und der Begriff Trägergas als gleichbedeutend angesehen.

Das Si02-Einsatzmaterial wird durch eine entsprechende Rohrleitung in die Expansionskammer eingeführt und dort über einen Zerstäuberdüse zerstäubt und/oder versprüht. Um einen möglichst gleichmäßigen Übergang des Si02-Einsatzmaterials in den Si02-Einsatzdampf zu erzielen, sollte ein Verdünnungsmittel wie etwa Stickstoff in die Expansionskammer eingeführt werden. Der zweite Teil des flüssigen Si02-Einsatzmaterials verdampft beim Eintritt in die Expansionskammer, da der Partialdruck des flüssigen Si02-Einsatzmaterials in der Kammer vermindert ist und so dessen Taupunkt ebenfalls sinkt. Die Besonderheit dieses Verfahrens besteht darin, dass durch die Senkung des Partialdruckes auch jene Temperatur reduziert wird, bei der das flüssige Si02-Einsatzmaterial in die Gasphase übertritt. Als Trägergase bzw. Verdünnungsmittel haben sich neben Stickstoff auch Argon oder Helium bewährt.

Eine weitere Ausführungsvariante des erfindungsgemäßen Verfahrens zeichnet sich dadurch aus, dass das Si02-Einsatzmaterial in Folge des Druckabfalls und/oder der Senkung des Partialdruckes zu mindestens 99 Gew.% insbesondere 99,95 Gew.%, besonders bevorzugt 99,9995 Gew.% in den Si02-Einsatzdampf überführt wird. Um eine vollständige Umsetzung zu erzielen, hat es sich als vorteilhaft erwiesen, wenn das flüssige Si02-Einsatzmaterial in sehr feine Tröpfchen zerstäubt wird. Deren mittlerer Durchmesser sollte dabei kleiner als 5 $\mu$m, vorzugsweise weniger als 2 $\mu$m, besonders bevorzugt weniger als 1 $\mu$m aufweisen. Um diese Aufteilung der Flüssigkeit in kleine Tröpfchen zu unterstützen, hat es sich als sinnvoll erwiesen, Ultraschallzerstäuber einzusetzen, welche durch die Einwirkung von Ultraschall zu einer gleichmäßigen und feinen Zerstäubung des Si02-Einsatzmaterials führen. Im Rahmen der Erfindung bezeichnet Ultraschall einen Schall mit Frequenzen, die oberhalb des vom Menschen wahrgenommenen Bereiches liegen.

Eine weitere Ausführungsvariante des erfindungsgemäßen Verfahrens zeichnet sich dadurch aus, dass das flüssige Ti02-Einsatzmaterial bei Raumtemperatur unter einem definierten Druck (z. B. zwischen 1 und 5 bar) in einer Zerstäuberdüse in sehr kleine, wenige Mikrometer große Tröpfchen überführt wird. Ein Trägergas (Verdünnungsgas) wird über einen Wärmetauscher zunächst erwärmt und so mit den Tröpfchen vermischt, dass die Verdampfung überwiegend in der Gasphase und nicht an heißen Oberflächen stattfindet. Dieses Verfahren kann so ausgelegt werden, dass es nicht notwendig ist das flüssige Ti02-Einsatzmaterial vorzuwärmen. Bei dieser Variante findet ein Vermischen des Trägergases und des flüssigen Ti02-Einsatzmaterials vor der eigentlichen Zerstäubung in Tröpfchen statt.

Im Rahmen einer Ausführungsvariante der Erfindung ist es vorgesehen, dass das flüssige Ti02-Einsatzmaterial vollständig in den gasförmigen Ti02-Einsatzdampf überführt wird. Bei den bekannten Verdampfungssystemen wird die zu verdampfende Flüssigkeit mit einer heißen Oberfläche in Kontakt gebracht. Die Oberflächen in Verdampfern können die Stabilität des Ti02-Einsatzmaterials beeinflussen. Um diese Nachteile zu überwinden, ergibt sich eine weitere vorteilhafte Ausgestaltung des erfindungsgemäßen Verdampfungsprozesses dadurch, dass das Verdampfen die Schritte umfasst:

- Erhitzen des Ti02-Einsatzmaterials,
- Einführen des erhitzten Ti02-Einsatzmaterials in eine Expansionskammer, so dass zumindest ein erster Teil des Ti02-Einsatzmaterials in Folge eines Druckabfalls verdampft.

Im Rahmen dieser Ausgestaltung findet eine Erhitzung des Ti02-Einsatzmaterials statt. Dabei werden Temperaturen des Ti02-Einsatzmaterials zwischen 150 und 230°C angestrebt. Als vorteilhaft hat sich die Verwendung eines Flüssig/Flüssig-Heizsystems erwiesen, bei dem das Ti02-Einsatzmaterial mittels einer weiteren Flüssigkeit, wie etwa Öl, erhitzt wird. Durch einen Flüssig-zu-Flüssig-Wärmetauscher findet eine gleichmäßige, konstante Erwärmung des Ti02-Einsatzmaterials statt, ohne dass dabei singuläre, heiße Bereiche auftreten, wie dieses etwa bei elektrischen Heizdrähten der Fall ist. Als besonders schonend für das Ti02-Einsatzmaterial hat es sich herausgestellt, wenn diese Verdampfung in Folge eines Druckabfalles geschieht. Dazu kann beispielsweise das Ti02-Einsatzmaterial als eine überkritische Flüssigkeit erhitzt werden. Nur durch einen entsprechenden Druck innerhalb der Aufheizvorrichtung wird ein Sieden des Ti02-Einsatzmaterials verhindert. Bei der Expansion innerhalb der Expansionskammer entspannt sich das Ti02-Einsatzmaterial derart, dass es in die Gasphase übergeht. Als vorteilhaft haben sich Druckabfälle zwischen 1,8 und 5 bar herausgestellt.

Eine weitere vorteilhafte Ausgestaltung des erfindungsgemäßen Verdampfungsprozesses ergibt sich dadurch, dass das Verdampfen die Schritte umfasst:

- Erhitzen des Ti02- Einsatzmaterials,
- Einführen des erhitzten Ti02- Einsatzmaterials in die Expansionskammer,
- Vermischen des Ti02-Einsatzmaterials mit einem erhitzten Verdünnungsmittel, so dass zumindest ein zweiter Teil Ti02-Einsatzmaterials in Folge einer Senkung des Taupunktes verdampft.

Im Rahmen dieser Ausführungsvariante wird zur Verdampfung des Einsatzmaterials ein Verdünnungsmittel genutzt. Vorteilhafterweise handelt es sich bei dem Verdünnungsmittel um ein Trägergas, welches die Expansionskammer durchströmt. Aus diesem Grund wird im Folgenden der Begriff Verdünnungsgas und der Begriff Trägergas als gleichbedeutend angesehen.

Im Rahmen dieser Ausführungsvariante findet ebenfalls ein Erhitzen des Ti02-Einsatzmaterials statt. Wie schon dargelegt, hat es sich als vorteilhaft erwiesen, wenn die Erhitzung mittels eines Wärmetauschers geschieht und zu einer Erhitzung des Ti02-Einsatzmaterials auf eine Temperatur im Bereich von 120 bis 230°C führt. Das Ti02-Einsatzmaterial wird durch eine entsprechende Rohrleitung in die Expansionskammer eingeführt und dort über einen Zerstäuberdüse zerstäubt und/oder versprüht. Um einen möglichst gleichmäßigen Übergang des Ti02-Einsatzmaterials in den Ti02-Einsatzdampf zu erzielen, sollte ein Verdünnungsmittel wie etwa Stickstoff, insbesondere entgegen der Einsprührichtung des Ti02-Einsatzmaterials, in die Expansionskammer eingeführt werden. Der zweite Teil des flüssigen Ti02-Einsatzmaterials verdampft beim Eintritt in die Expansionskammer, da der Partialdruck des flüssigen Ti02-Einsatzmaterials in der Kammer vermindert ist und so dessen Taupunkt ebenfalls sinkt. Die Besonderheit dieses Verfahrens besteht darin, dass durch die Senkung des Partialdruckes auch jene Temperatur reduziert wird, bei der das flüssige Ti02-Einsatzmaterial in die Gasphase übertritt. Je nach Menge des zugefügten, erhitzten Trägergases sinkt der Taupunkt des Ti02-Einsatzmaterials um bis zu 30°C. Entsprechend bedarf es keiner so starken Erhitzung des Ti02-Einsatzmaterials im Vorlauf. Als Trägergase bzw. Verdünnungsmittel haben sich neben Stickstoff auch Argon oder Helium bewährt.

Eine weitere Ausführungsvariante des erfindungsgemäßen Verfahrens zeichnet sich dadurch aus, dass das Ti02-Einsatzmaterial in Folge des Druckabfalls und/oder der Senkung des Partialdruckes zu mindestens 99 Gew.% insbesondere 99,95 Gew.%, besonders bevorzugt 99,9995 Gew.% in den Ti02-Einsatzdampf überführt wird. Bei einer Alternative dieser Ausführungsform findet die Überführung des flüssigen Ti02-Einsatzmaterials in die Gasphase nur durch den Druckabfall beim Eintritt des erhitzten und unter Druck stehenden Ti02-Einsatzmaterials in die Expansionskammer statt. Um hier eine vollständige Umsetzung zu erzielen, hat es sich als vorteilhaft erwiesen, wenn das flüssige Ti02-Einsatzmaterial in sehr feine Tröpfchen zerstäubt wird. Deren mittlerer Durchmesser sollte dabei kleiner als 5 $\mu$m, vorzugsweise weniger als 2 $\mu$m, besonders bevorzugt weniger als 1 $\mu$m aufweisen.

Um diese Aufteilung der Flüssigkeit in kleine Tröpfchen zu unterstützen, hat es sich als sinnvoll erwiesen, Ultraschallzerstäuber einzusetzen, welche durch die Einwirkung von Ultraschall zu einer gleichmäßigen und feinen Zerstäubung des Ti02-Einsatzmaterials führen. Im Rahmen der Erfindung bezeichnet Ultraschall einen Schall mit Frequenzen, die oberhalb des vom Menschen wahrgenommenen Bereiches liegen. Im Rahmen der zweiten Alternative findet die Umsetzung des flüssigen Ti02-Einsatzmaterials in die Dampfphase ausschließlich durch die Nutzung des Trägergases mit der Folge der Senkung des Partialdruckes statt. Dabei müssen entsprechend ausreichende Mengen des Verdünnungsmittels/Trägergases durch die Expansionskammer hindurch strömen und so für die Verdampfung des flüssigen Ti02-Einsatzmaterials sorgen. Als dritte Alternative führt diese Ausführungsvariante des erfindungsgemäßen Verfahrens auf, dass die Verdampfung des flüssigen Einsatzmaterials sowohl durch die Nutzung des Druckabfalles als auch durch die Senkung des Partialdruckes geschieht. Diese Kombination der Verdampfung in Folge eines Druckabfalls und einer Senkung des Taupunktes ermöglicht es, dass von dem flüssig in den Verdampfer eingebrachten Ti02-Einsatzmaterial nur sehr geringe Anteile (weniger als 20 ppm, bevorzugt weniger als 10 ppm, besonders bevorzugt weniger als 5 ppm) nicht verdampfen. In einzelnen Versuchen konnte der Anteil an nicht verdampften Ti02-Einsatzdampf sogar auf weniger als 2,5 ppm reduziert werden.

Das flüssige Ti02-Einsatzmaterial lässt sich leichter und gleichmäßiger in die Gasphase überführen, wenn die einzelnen zu verdampfenden Mengen jeweils gering sind und eine große Oberfläche aufweisen. Dieses lässt sich am besten dadurch erzielen, dass die Flüssigkeit des Ti02-Einsatzmaterials in feine Tröpfchen zerstäubt wird. Die zerstäubten Tröpfchen können dann über den Druckabfall und/oder die Vermischung mit dem erhitzten Verdünnungsmittel/Trägergas in die Gasphase überführt werden. Es hat sich als günstig erwiesen, wenn der Kontakt der feinen Tröpfchen mit dem heißen Trägergas in einer Kammer erfolgt, die auf einer Temperatur im Bereich von 150°C bis 230°C gehalten wird. Bei einer Temperatur von weniger als 150 °C besteht eine gewisse Gefahr, dass Tröpfchen nicht vollständig verdampfen, so dass Flüssigkeit in die Reaktionszone eingeschleppt wird, was zu Inhomogenitäten im Partikelbildungsprozess und zu Fehlern im Sootkörperaufbau führt, wie etwa Blasen. Bei Temperatur oberhalb von 230°C steigt die Tendenz, dass ansonsten energetisch gehemmte Reaktionen mit unreproduzierbaren und unerwünschten Reaktionsprodukten, insbesondere von Zersetzungen und Polymerisationsreaktionen.

Eine weitere Ausführungsvariante des erfindungsgemäßen Verfahrens zeichnet sich dadurch aus, dass das flüssige Ti02-Einsatzmaterial bei Raumtemperatur unter einem definierten Druck (z. B. zwischen 1 und 5 bar) in einer Zerstäuberdüse in sehr kleine, wenige Mikrometer große Tröpfchen überführt wird. Ein Trägergas (Verdünnungsgas) wird über einen Wärmetauscher zunächst erwärmt und so mit den Tröpfchen vermischt, dass die Verdampfung überwiegend in der Gasphase und nicht an heißen Oberflächen stattfindet. Dieses Verfahren kann so ausgelegt werden, dass es nicht notwendig ist das flüssige Ti02-Einsatzmaterial vorzuwärmen. Bei dieser Variante findet ein Vermischen des Trägergases und des flüssigen Ti02-Einsatzmaterials vor der eigentlichen Zerstäubung ein Tröpfchen statt.

Eine weitere Ausführungsvariante des erfindungsgemäßen Verfahrens zeichnet sich dadurch aus, dass das flüssigen Ti02-Einsatzmaterials zu mindestens 99 Gew.% in den gasförmigen Ti02-Einsatzdampf verdampft wird. Weiterhin zeichnet sich eine Ausführungsvariante des erfindungsgemäßen Verfahrens sich dadurch aus, dass das Polyalkylsiloxan D3 mit dem Gewichtsanteil mD3 und das flüssigen Ti02-Einsatzmaterials mit einem Gewichtsanteil mTi02 in einem Gewichtsverhältnis mTi02/mD3 in einem Bereich zwischen 0,1 und 10 verdampft werden.

Eine weitere Ausführungsvariante des erfindungsgemäßen Verfahrens zeichnet sich dadurch aus, dass das flüssige Ti02-Einsatzmaterial weniger als 2 Gew.-ppm Wasser aufweist. Dieses unterstützt die Bildung eines homogenen Quarzglaskörpers. Eine weitere Ausführungsvariante des erfindungsgemäßen Verfahrens zeichnet sich dadurch aus, dass das flüssige Ti02-Einsatzmaterial wenigstens 80 Gew.-% Titan Isopropoxid (Ti{OCH(CH3)2}4) aufweist.

Eine weitere vorteilhafte Ausgestaltung des erfindungsgemäßen Verfahrens zeichnet sich dadurch aus, dass die Zusatzkomponente D3 und/oder die Zusatzkomponente D5 zwischen 0,5 Gew.% und 30 Gew.% eines Gesamtgewichtes des flüssigen $SiO_2$ Einsatzmaterials stellen, insbesondere die Summe der Gewichtsanteile mD3 + mD5 im Bereich zwischen 1 und 15 Gew.%, bevorzugt zwischen 1 und 3 Gew.% liegt. Überraschende Messungen haben gezeigt, dass die Zusatzkomponenten D3 und D5 nicht das $SiO_2$-Einsatzmaterial dominieren müssen. Vielmehr reichen Beimischungen von maximal einem Drittel des Gesamtgewichtes aus, um ein erfindungsgemäß beanspruchtes $SiO_2$-Einsatzmaterial zu erstellen, welches bei seinem Abscheiden als $SiO_2$-Partikel zu einer Verbreiterung der Partikelgröße und damit zu einer gesteigerten Homogenität des so erzeugten Sootkörpers führen. So haben eine Mehrzahl von Messungen überraschend gezeigt, dass auch Gewichtsanteile zwischen 1 und 3 Gew.% der Zusatzkomponenten D3 und D5 ausreichen. Schon diese vergleichsweise geringen Mengen an Zusatzkomponenten D3, D5 bewirken durch die vollständigen Überführung in die Gasphase das etwaige auftretende Dichteschwankungen im Sootkörper durch die unterschiedlichen Partikelgrößen des $SiO_2$-Dampfes überdeckt werden, so dass insgesamt ein wesentlich homogenerer Sootkörper bzw. Quarzglaskörper erstellt wird.

Sootkörper, die nach dem Stand der Technik aufgebaut werden, weisen eine Dichte von 25 bis 32 % bezogen auf die Dichte von Quarzglas auf. Dabei zeigen diese Sootkörper eine relative Schwankung in der Dichte von 3 bis 4 %. Diese Dichteschwankungen setzen sich bei der Verglasung auch in den Quarzglaskörper um. Daraus ergeben sich radiale, azimutale und axiale Variationen der Hydroxylgruppen oder Chlorkonzentrationen, die zu ungünstigen Eigenschaften des Quarzglaszylinders und der daraus produzierten EUV Spiegelsubstraten führen können. Das erfindungsgemäße Verfahren zeichnet sich dadurch aus, dass die bekannten Dichteschwankungen im Sootkörper reduziert werden. Da sich diese Reduktion der Dichteschwankungen auf die Qualität des Quarzglaszylinders direkt auswirkt, wurden entsprechend hochwertigere, homogenere Quarzglaszylinder erstellt. Dieses weist den Vorteil auf, dass bei der späteren Verwendung der Quarzglaszylinder etwa bei der Herstellung von EUV Spiegelsubstraten weniger Ausschuss entsteht.

Viele der Messergebnisse deuten darauf hin, dass die bei der Zersetzung der Polyalkylsiloxane nötige Aktivierungsenergie des Polyalkylsiloxanes D3 geringer ist als bei dem D4 und bei dem Polyalkylsiloxan D5 größer ist als bei D4. Die Aktivierungsenergie des Polyalkylsiloxanes D3 ist geringer, da dieses Molekül eine höhere Ringspannung aufweist. Somit lässt sich der Ring schneller öffnen als bei dem stabileren D4. Im Gegensatz dazu zeichnet es sich ab, dass das Polyalkylsiloxan D5 eine höhere Aktivierungsenergie als das D4 benötigt, um eine thermische Spaltung des Moleküls auszulösen. Insgesamt zeigte sich aber, dass die Energiedifferenz zwischen D4 und D3 stärker ist als zwischen D4 und D5. Deshalb und da D3 stärker zu Polymerisationsreaktionen neigt, hat es sich als vorteilhaft herausgestellt, wenn die Menge der Zusatzkomponenten D3 geringer ist als jene der Zusatzkomponente D5. So zeichnet sich eine vorteilhafte Ausführungsvariante des erfindungsgemäßen Verfahrens dadurch aus, dass die Zusatzkomponenten Polyalkylcyclosiloxane und jeweils deren lineare Homologen in folgenden Mengen umfassen:

- Hexamethylcyclotrisiloxan (D3): Gewichtsanteil mD3 im Bereich zwischen 0,02 Gew.% und 1 Gew.%,
- Dekamethylcyclopentasiloxan (D5) Gewichtsanteil mD5 im Bereich zwischen 0,5 Gew.% und 5 Gew.%.

Im Rahmen von Messungen bestätigte sich überraschend, dass bei Nutzung der oben genannten Mengen an Zusatzkomponenten die Dichteschwankungen innerhalb der Sootkörper weniger als 0,4 % betrugen. Eine weitere Verbesserung der Dichteschwankungen der Sootkörper ergab sich dadurch, dass die Zusatzkomponenten Polyalkylcyclosiloxane und jeweils deren lineare Homologen in folgenden Mengen umfassen:

    ∘ Hexamethylcyclotrisiloxan (D3): Gewichtsanteil mD3 im Bereich zwischen 0,02 Gew.% und 2 Gew.%,
    ∘ Dekamethylcyclopentasiloxan (D5) Gewichtsanteil mD5 im Bereich zwischen 0,5 Gew.% bis 10 Gew.%.

Teilweise wurde bei den Messungen noch D6 mit einem Gewichtsanteil $m_{D6}$ im Bereich zwischen 0,01 Gew.% und 0,75 Gew.% beigegeben. Dieses fand im Allgemeinen im Austausch mit der entsprechenden Menge D5 statt. Allerdings bewirkt Dodekamethylcyclohexasiloxan (D6) und deren lineare Homologen wegen ihrer großen Molekülmasse im Vergleich zu D4 bereits in geringer Konzentration eine merkliche Veränderung der Reaktionszone und des Partikelbildungsprozesses, so dass der Gewichtsanteil von D6 vorzugsweise nicht mehr als 100 Gew.-ppm beträgt.

Eine weitere vorteilhafte Ausgestaltung des erfindungsgemäßen Verfahrens zeichnet sich dadurch aus, dass die TiO2-Konzentration in dem synthetischen Quarzglas zwischen 7 Gew.-% und 10 Gew.-%, insbesondere zwischen 7,8 Gew.-% und 8,9 Gew.-% beträgt. Diese Menge ermöglicht eine für EUV Spiegel benötigte thermischen Ausdehnungskoeffizienten. Alternativ oder zusätzlich zeichnet sich eine weitere vorteilhafte Ausgestaltung des erfindungsgemäßen Verfahrens dadurch aus, dass die Ti3+ Konzentration in dem synthetischen Quarzglases zwischen 1 ppm und 200 ppm, insbesondere zwischen 1 ppm und 50 ppm insbesondere zwischen 1 ppm und 20 ppm beträgt. Auch dieser Parameter ist für die Justage des thermischen Ausdehnungskoeffizienten hilfreich.

Eine weitere vorteilhafte Ausgestaltung des erfindungsgemäßen Verfahrens zeichnet sich dadurch aus, dass eine Variation $\Delta$Ti3+ /Ti3+ der Ti3+ Konzentration in dem synthetischen Quarzglases an einer optisch genutzten Oberfläche 0,8 oder weniger, insbesondere zwischen 0,0002 und 0,5 beträgt. Eine weitere vorteilhafte Ausgestaltung des erfindungsgemäßen Verfahrens zeichnet sich dadurch aus, dass die interne Transmission bei 1 mm Weglänge in einem Wellenlängenbereich von 400 nm bis 700 nm mindestens 80%, insbesondere mindestens 90% beträgt. Eine weitere vorteilhafte Ausgestaltung des erfindungsgemäßen Verfahrens zeichnet sich dadurch aus, dass eine fiktive Temperatur des synthetischen Quarzglases maximal 1.050°C, insbesondere maximal 1.000°C, besonders bevorzugt maximal 950°C beträgt.

Eine weitere vorteilhafte Ausgestaltung des erfindungsgemäßen Verfahrens zeichnet sich dadurch aus, dass der thermische Ausdehnungskoeffizient in einem Temperaturfenster von 0°C bis 100°C maximal $0\pm$ 150 ppb/°C, insbesondere maximal $0\pm$ 100 ppb/°C, bevorzugt maximal $0\pm$ 75 ppb/°C beträgt.

Eine weitere vorteilhafte Ausgestaltung des erfindungsgemäßen Verfahrens zeichnet sich dadurch aus, dass der Titan-dotierte SiO$_2$-Sootkörper mit Fluor dotiert wird. Dazu kann der Titan-dotierte SiO$_2$-Sootkörper in einen Dotierofen eingebracht und dort einer Fluorhaltigen Atmosphäre ausgesetzt.

Eine weitere vorteilhafte Ausgestaltung des erfindungsgemäßen Verfahrens zeichnet sich dadurch aus, dass das Verfahren die Schritte umfasst:

   ∘ Umwandeln eines flüssigen Fluor-Einsatzmaterials in einen gasförmigen Fluor-Einsatzdampf,
   ∘ Umsetzen des Fluor-Einsatzdampfes zu Fluor-Partikeln,
   ∘ Aufbringen der Fluor-Partikel zusammen mit den Si02-Partikeln und den Ti02-Partikel auf der Ablagerungsfläche, unter Bildung eines Titan und Fluor dotierten Si02 Sootkörpers,

Es hat sich gezeigt, dass auch Fluor eine positive Auswirkung auf die Homogenität der Titan Dotierung innerhalb des Sootkörpers aufweist. Deshalb zeichnet sich eine weitere vorteilhafte Ausgestaltung des erfindungsgemäßen Verfahrens dadurch aus, dass die Fluor-Konzentration im synthetischen Quarzglas mindestens 100 Gew.-ppm beträgt.

Ebenfalls beansprucht wird die Verwendung eines synthetischen Quarzglases, welches hergestellt wird nach dem hier offenbarten Verfahren, wobei das synthetische Quarzglas zur Produktion von EUV-Spiegelsubstraten eingesetzt wird. (EUV bedeutet hier "Extrem ultraviolette Strahlung"; der Spektralbereich zwischen 10 nm und 121 nm) Das hier offenbarte Verfahren ermöglicht die Herstellung von Quarzglas mit sehr hoher Qualität,. Durch die geringen Dichteschwankungen des Sootkörpers lassen sich qualitativ hochwertige Quarzgläser erstellen, die bevorzugt für EUV-Spiegelsubstrate eingesetzt werden.

Weitere Vorteile, Merkmale und Einzelheiten der Erfindung ergeben sich aus den Unteransprüchen und der nachfolgenden Beschreibung, in der unter Bezugnahme auf die Zeichnung ein Ausführungsbeispiel der Erfindung im einzelnen beschrieben sind. Dabei können die in den Ansprüchen und der Beschreibung erwähnten Merkmale jeweils einzeln für sich oder in beliebiger Kombination erfindungswesentlich sein. Es zeigt:

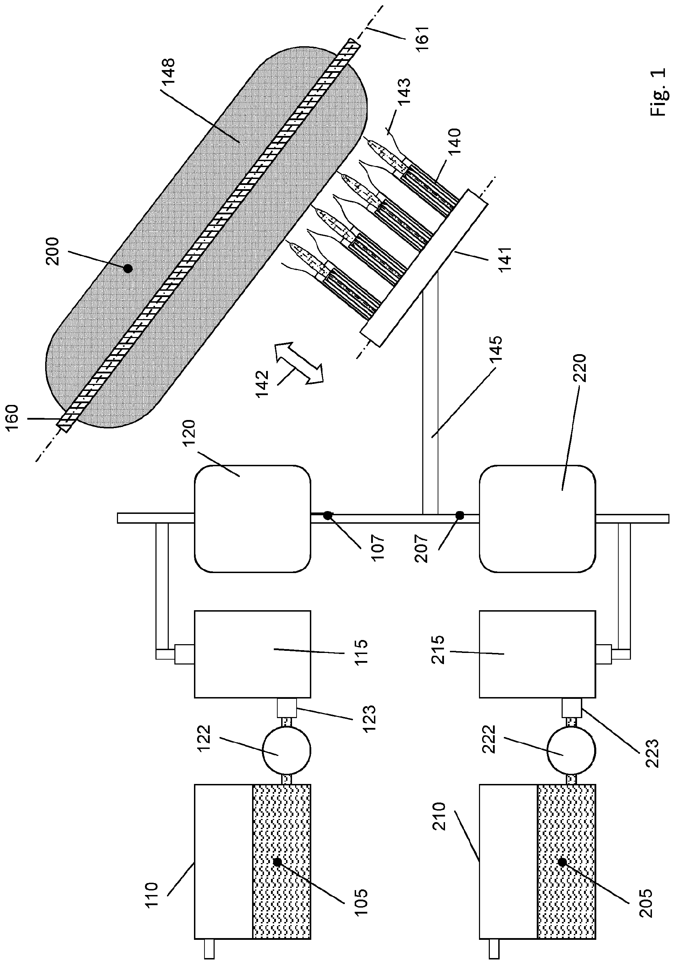

Figur 1    eine Vorrichtung zur Durchführung des erfindungsgemäßen Verfahrens zur Herstellung eines SiO$_2$-Sootkörpers in schematischer Darstellung.

Im Stand der Technik ist bekannt, das Polyalkylsiloxan Octamethylcyclotetrasiloxan (D4) zur Herstellung von Quarzglas zu nutzen. Mit den bekannten Herstellungsverfahren lassen sich allerdings nur synthetische Quarzgläser herstellen, die eine gewisse Schichtstruktur aufweisen. Einer der Zielpunkte dieser Erfindung ist es, jenen Nachteil - die Bereiche lokaler Änderungen der Dichte und/oder der chemischen Zusammensetzung - bei der Herstellung von Titan-dotierten Quarzglas zu überwinden. Der Ausgangspunkt des erfindungsgemäßen Verfahrens ist dabei die Bildung eines Gasstromes aus einem SiO$_2$-Einsatzdampf 107, der als Hauptkomponente D4 enthält sowie einem Ti02-Einsatzdampf 207. Der Gasstrom wird einer Reaktionszone zugeführt, in der der SiO$_2$-Einsatzdampf und der Ti02-Einsatzdampf unter Bildung amorpher, Titan-dotierter SiO$_2$-Partikel durch Pyrolyse, Oxidation oder Hydrolyse zu Titan-dotiertem SiO$_2$ 148 umgesetzt wird.

Das sich anschließende Abscheiden der amorphen SiO$_2$-Partikel auf einer Ablagerungsfläche 160 führt zur Bildung eines porösen, Titan-dotierten SiO$_2$-Sootkörpers 200, der durch Verglasung ein synthetisches, Titan-dotiertes Quarzglas bildet. Um dabei die Herstellung von großvolumigen zylinderförmigen Sootkörpern 200 mit Außendurchmessern von mehr als 300 mm mit verbesserter Materialhomogenität zu ermöglichen, offenbart die Erfindung, dass das Ausgangsmaterial D4 wenigstens zwei Zusatzkomponenten in Form weiterer Polyalkylsiloxane aufweist. Es handelt sich aber dabei nicht um willkürliche Polysiloxane, sondern um ein Polysiloxan mit einer Molekülmasse, die geringer ist als jene, der Referenzmolekülmasse von D4, sowie einem Polysiloxan, welches eine Molekülmasse aufweist, die größer ist als die der Referenzmolekülmasse von D4. Überraschenderweise zeigten Messungen, dass durch die Nutzung eines schwereren sowie eines leichteren Polyalkylsiloxanes in Verbindung mit dem Basismaterial D4 eine Verbreiterung der Partikelgrößenverteilung der $SiO_2$-Primärpartikel auftritt. Zusätzlich ist die Schwankung der Breite der Partikelgrößenverteilung geringer als bei vergleichbaren Verfahren zur Herstellung von synthetischem Quarzglas, insbesondere von Titan-dotierten synthetischem Quarzglas, die etwa ausschließlich D4 oder SiCl4 nutzen.

Die in Figur 1 dargestellte Vorrichtung dient zur Herstellung eines Titan-dotierten $SiO_2$-Sootkörpers 200. Entlang eines Trägerrohres 160 aus Aluminiumoxid ist eine Vielzahl in einer Reihe angeordneter Flammhydrolysebrenner 140 angeordnet. Bei einer auf höhere Produktivität abzielenden Verfahrensabwandlung wird anstelle nur eines Brenners 140 eine Vielzahl von Abscheidebrennern eingesetzt, die zur Soot-Abscheidung in einer gemeinsamen Brennerreihe entlang des rotierenden Trägers reversierend hin- und herbewegt werden, wobei jede der Brennerflammen nur eine Teillänge des Trägerrohres 160 überstreicht.

Das erfindungsgemäß mit Zusatzkomponenten angereicherte $SiO_2$-Einsatzmaterial 105 wird der Reaktionszone in gasförmiger Form zugeführt und dabei durch Oxidation und/oder Hydrolyse und/oder Pyrolyse zu $SiO_2$ zersetzt. Die Reaktionszone ist beispielsweise eine Brennerflamme oder ein Plasma. In der Reaktionszone entstehen $SiO_2$-Partikel 148, die unter Bildung des $SiO_2$-Sootkörpers auf der Ablagerungsfläche 160 schichtweise niedergeschlagen werden. Die $SiO_2$-Partikel 148 selbst liegen in Form von Agglomeraten oder Aggregaten von $SiO_2$-Primärpartikeln mit Partikelgrößen im Nanometerbereich vor.

Das $TiO_2$-Einsatzmaterial 205 wird der Reaktionszone in gasförmiger Form zugeführt und dabei durch Oxidation und/oder Hydrolyse und/oder Pyrolyse zu $TiO_2$ zersetzt. Die Reaktionszone ist beispielsweise eine Brennerflamme oder ein Plasma. In der Reaktionszone entstehen $TiO_2$-Partikel 148, die unter Bildung des Titan-dotierten $SiO_2$-Sootkörpers auf der Ablagerungsfläche 160 niedergeschlagen werden.

Die Flammhydrolysebrenner 140 sind auf einem gemeinsamen Brennerblock 141 montiert, der parallel zur Längsachse 161 des Trägerrohrs 160 zwischen zwei, in Bezug auf die Längsachse 161 ortsfesten Wendepunkten hin- und herbewegt wird und der senkrecht dazu verschiebbar ist, wie dies die Richtungspfeile 142 andeuten. Die Brenner 140 bestehen aus Quarzglas; ihr Mittenabstand zueinander beträgt 10 bis 18 cm.

Den Flammhydrolysebrennern 140 ist jeweils eine Brennerflamme 143 zugeordnet, die eine Reaktionszone im Sinne der Erfindung darstellt. In ihr werden $TiO_2$ und/oder $SiO_2$-Partikel gebildet und auf der Zylindermantelfläche des um seine Längsachse 161 rotierenden Trägerrohrs 160 abgeschieden, so dass schichtweise ein Sootkörper 6 mit einem Außendurchmesser von 350 mm aufgebaut wird. Während des Abscheideprozesses stellt sich auf der Sootkörperoberfläche 200 eine Temperatur von etwa 1200°C ein.

Den Flammhydrolysebrennern 140 werden jeweils als Brennergase Sauerstoff und Wasserstoff zugeführt sowie als Einsatzmaterial für die Bildung der $SiO_2$-Partikel der $SiO_2$-Einsatzdampf 107 und/oder als Einsatzmaterial für die Bildung der $TiO_2$-Partikel der $TiO_2$-Einsatzdampf 207.

Die Herstellung des $SiO_2$-Einsatzdampfes 107 mit dem Polyalkylsiloxan-Gemisch erfolgt mittels eines Verdampfersystems 120, das einen Vorratsbehälter 110 für das flüssige Gemisch, eine Flüssigkeitspumpe 122 und ein Durchflussmessgerät 123 für Flüssigkeit umfasst. Der Vorratsbehälter 110, eine Pumpe 122 und ein Zerstäuber 128 sind mittels flexibler metallischer Leitungen miteinander verbunden. Der Vorratsbehälter 110 wird auf eine Temperatur von 170°C erhitzt, und die erhitzte Flüssigkeit mittels der Pumpe 122 dem Verdampfer 120 zugeführt. Auch die Herstellung des $TiO_2$-Einsatzdampfes 207 erfolgt mittels eines Verdampfersystems 220, das einen Vorratsbehälter 210 für das flüssige Ti02-Gemisch, eine Flüssigkeitspumpe 222 und ein Durchflussmessgerät 223 umfasst.

Der Verdampfer 120 hat eine Innentemperatur von 195°C, so dass die feinen Flüssigkeitstöpfchen unmittelbar verdampfen und der Dampfstrom einem ortsfesten Flussteiler zugeführt und von diesem über wärmeisolierte flexible Medienzufuhrleitungen auf die einzelnen Abscheidebrenner 140 aufgeteilt wird.

Nach Abschluss des Abscheideprozesses wird ein Hohlzylinder aus porösem Titan-dotierte $SiO_2$-Soot (Sootrohr) erhalten, das einer computertomographischen Untersuchung (CT-Untersuchung) unterzogen wird. Dabei wird das Sootrohr 200 über seine Länge mit Röntgenstrahlen durchstrahlt. Die so gewonnenen Aufnahmen lassen quantitative und qualitative Aussagen über die Intensität und die Homogenität der axialen und radialen Schichtstruktur des Sootzylinder 200 zu.

Es hat sich gezeigt, dass auch Fluor eine positive Auswirkung auf die Homogenität der Titan Dotierung innerhalb durch folgende Schritte aus:

- Umwandeln eines flüssigen Fluor-Einsatzmaterials in einen gasförmigen Fluor-Einsatzdampf und
- Umsetzen des $SiO_2$-Einsatzdampfes (107), des Ti02-Einsatzdampfes, des Fluor-Einsatzdampf zu Si02-Partikeln und Ti02-Partikeln und Fluor-Partikeln,
- Abscheiden der Si02-Partikel, der Ti02-Partikel und der Fluor-Partikel auf einer Ablagerungsfläche unter Bildung eines Titan- und Fluor-dotierten $SiO_2$ Sootkörpers (200),
- Verglasen des Titan- und Fluor-dotierten $SiO_2$-Sootkörpers unter Bildung des synthetischen Quarzglases, wobei die Fluor-Konzentration im synthetischen Quarzglas mindestens 100 Gew.-ppm beträgt.

Wie dargelegt, ist es Ziel des erfindungsgemäßen Verfahrens, dass das aus einer Mehrzahl von Polyalkylsiloxanen aufgebaute flüssige $SiO_2$-Einsatzmaterial vollständig in die Gasphase überführt wird, und dabei die Gewichtsverhältnisse der Zusatzkomponenten D3 und D5 beibehält. Nach diesseitiger überraschender Erkenntnis entsteht durch die Addition der Zusatzkomponenten D3 und D5 in eine D4-Flüssigkeit ein $SiO_2$-Einsatzmaterial, mittels welchem besonders homogene, Titan-dotierte $SiO_2$-Sootkörper aufgebaut werden können. Vorteilhafterweise weist dabei das D4-Ausgangsmaterial nur eine Verunreinigung von weniger als 500 ppm auf, wobei als Verunreinigung insbesondere alle Polyalkylsiloxane verstanden werden, die nicht D3, D4 oder D5 sind.

**Bezugszeichen**

| 105 | $SiO_2$-Einsatzmaterial |
| 107 | $SiO_2$-Einsatzdampf |

| 110 | Vorratstank / Vorratsbehälter (OMCTS) |
| 115 | Vorheizeinrichtung ($SiO_2$) |

| 120 | Verdampfer/Verdampfersystem ($SiO_2$) |
| 122 | Flüssigkeitspumpe ($SiO_2$) |
| 123 | Durchflussmessgerät ($SiO_2$) |

| 140 | Brenner / Flammhydrolysebrenner |
| 141 | Brennerblock |
| 142 | Bewegung von 140 |
| 143 | Brennerflamme |
| 145 | Zuführungsleitung |
| 148 | $SiO_2$ und $TiO_2$ Soot |

| 160 | Ablagerungsfläche / Trägerrohr |
| 161 | Längsachse von 160 |

| 200 | Sootkörper |

| 205 | $TiO_2$-Einsatzmaterial |
| 207 | $TiO_2$-Einsatzdampf |

| 210 | Vorratstank / Vorratsbehälter ($TiO_2$) |
| 215 | Vorheizeinrichtung ($TiO_2$) |
| 220 | Verdampfer / Verdampfersystem ($TiO_2$) |
| 222 | Flüssigkeitspumpe ($TiO_2$) |
| 223 | Durchflussmessgerät ($TiO_2$) |

**Patentansprüche**

1. Verfahren zur Herstellung von Titan-dotiertem synthetischen Quarzglas, umfassend die Verfahrensschritte:

(A) Bereitstellen eines flüssigen $SiO_2$-Einsatzmaterials (105), welches mehr als 60 Gew.% des Polyalkylsiloxanes D4 aufweist,
(B) Verdampfen des flüssigen $SiO_2$-Einsatzmaterials (105) in einen gasförmigen $SiO_2$ Einsatzdampf (107),
(C) Verdampfen eines flüssigen $TiO_2$-Einsatzmaterials (205) in einen gasförmigen $TiO_2$-Einsatzdampf (207),
(D) Umsetzen des $SiO_2$-Einsatzdampfes (107) und des $TiO_2$-Einsatzdampfes zu $SiO_2$-Partikeln und $TiO3_2$-Partikeln,
(E) Abscheiden der $SiO_2$-Partikel und der $TiO_2$-Partikel auf einer Ablagerungsfläche (160) unter Bildung eines Titan-dotierten $SiO_2$ Sootkörpers (200),
(F) Verglasen des Titan-dotierten $SiO_2$-Sootkörpers unter Bildung des synthetischen Quarzglases, wobei die $TiO_2$-Konzentration in dem synthetischen Quarzglases zwischen 5 Gew.% und 11 Gew.% beträgt,

**dadurch gekennzeichnet, dass**
das flüssige $SiO_2$-Einsatzmaterial (105) wenigstens eine Zusatzkomponente aus dem Polyalkylsiloxan D3 mit einem Gewichtsanteil mD3 und eine Zusatzkomponente aus dem Polyalkylsiloxan D5 mit einem Gewichtsanteil mD5 in einem Gewichtsverhältnis mD3/mD5 in einem Bereich zwischen 0,01 und 1 aufweist, und
das bereitgestellte, flüssige $SiO_2$-Einsatzmaterial (105) unter Beibehaltung des Gewichtsverhältnis mD3/mD5 und zu mindestens 99 Gew.% in den gasförmigen $SiO_2$-Einsatzdampf (107) verdampft wird, und
die Zusatzkomponenten Polyalkylcyclosiloxane und jeweils deren lineare Homologen in folgenden Mengen umfassen:

- Hexamethylcyclotrisiloxan (D3): Gewichtsanteil mD3 im Bereich zwischen 0,02 Gew.% und 2 Gew.%,
- Dekamethylcyclopentasiloxan (D5) Gewichtsanteil mD5 im Bereich zwischen 0,5 Gew.% bis 10 Gew.%.

2. Verfahren nach Anspruch 1, **dadurch gekennzeichnet, dass** das Verdampfen die Schritte umfasst:

• Erhitzen des $TiO_2$-Einsatzmaterials (205)
• Einführen des erhitzten $TiO_2$-Einsatzmaterials (205) in eine Expansionskammer (125), so dass zumindest ein erster Teil des $TiO_2$-Einsatzmaterials (205) in Folge eines Druckabfalls verdampft.

3. Verfahren nach wenigstens einem der vorhergehenden Ansprüche, **dadurch gekennzeichnet, dass** das Verdampfen die Schritte umfasst:

• Erhitzen des TiO$_2$- Einsatzmaterials (205),
• Einführen des erhitzten TiO$_2$- Einsatzmaterials (205) in eine Expansionskammer (125),
• Vermischen des TiO$_2$-Einsatzmaterials (205) mit einem erhitzten Verdünnungsmittel (152), so dass zumindest ein zweiter Teil des TiO$_2$-Einsatzmaterials (205) in Folge einer Senkung des Taupunktes verdampft.

4. Verfahren nach einem der Ansprüche 2 oder 3, **dadurch gekennzeichnet, dass** das TiO$_2$-Einsatzmaterial (205) infolge des Druckabfalls und/oder der Senkung des Taupunktes zu mindestens 99,95 Gew.%, bevorzugt 99,9995 Gew.% in den TiO$_2$-Einsatzdampf (207) überführt wird.

5. Verfahren nach wenigstens einem der vorhergehenden Ansprüche, **dadurch gekennzeichnet, dass** die TiO$_2$-Konzentration in dem synthetischen Quarzglas zwischen 7 Gew.-% und 10 Gew.-%, insbesondere zwischen 7,8 Gew.-% und 8,9 Gew.-% beträgt.

6. Verfahren nach wenigstens einem der vorhergehenden Ansprüche, **dadurch gekennzeichnet, dass** die Ti$^{3+}$ Konzentration in dem synthetischen Quarzglases zwischen 1 ppm und 200 ppm, insbesondere zwischen 1 ppm und 50 ppm insbesondere zwischen 1 ppm und 20 ppm beträgt.

7. Verfahren nach wenigstens einem der vorhergehenden Ansprüche, **dadurch gekennzeichnet, dass** eine Variation ΔTi$^{3+}$/Ti$^{3+}$ der Ti$^{3+}$ Konzentration in dem synthetischen Quarzglases an einer optisch genutzten Oberfläche 0,8 oder weniger, insbesondere zwischen 0,0002 und 0,5 beträgt.

8. Verfahren nach wenigstens einem der vorhergehenden Ansprüche, **dadurch gekennzeichnet, dass** die interne Transmission bei 1 mm Weglänge in einem Wellenlängenbereich von 400 nm bis 700 nm mindestens 80%, insbesondere mindestens 90% beträgt.

9. Verfahren nach wenigstens einem der vorhergehenden Ansprüche, **dadurch gekennzeichnet, dass** eine fiktive Temperatur des synthetischen Quarzglases maximal 1.050°C, insbesondere maximal 1.000°C, besonders bevorzugt maximal 950°C beträgt.

10. Verfahren nach wenigstens einem der vorhergehenden Ansprüche, **dadurch gekennzeichnet, dass** der thermische Ausdehnungskoeffizient in einem Temperaturfenster von 0°C bis 100°C maximal 0± 150ppb/°C beträgt.

11. Verfahren nach wenigstens einem der vorhergehenden Ansprüche, **dadurch gekennzeichnet, dass** der Titan-dotierte SiO$_2$-Sootkörper mit Fluor dotiert wird.

12. Verfahren nach dem vorhergehenden Anspruch 11, **dadurch gekennzeichnet, dass** die Fluor-Konzentration im synthetischen Quarzglas mindestens 100 Gew.-ppm beträgt.

13. Verfahren nach wenigstens einem der vorhergehenden Ansprüche, **dadurch gekennzeichnet, dass** das Polyalkylsiloxan D3 mit dem Gewichtsanteil mD3 und das flüssigen TiO$_2$-Einsatzmaterials (205) mit einem Gewichtsanteil mTiO$_2$ in einem Gewichtsverhältnis mTiO$_2$/mD3 in einem Bereich zwischen 0,1 und 10 verdampft werden.

14. Verfahren nach wenigstens einem der vorhergehenden Ansprüche, **dadurch gekennzeichnet, dass** das flüssigen TiO$_2$-Einsatzmaterial (205) wenigstens 80 Gew.-% Titan Isopropoxid (Ti{OCH(CH3)2} 4) aufweist.

## Claims

1. A method for the production of titanium-doped synthetic quartz glass, comprising the method steps of:

(A) providing a liquid SiO$_2$ charging stock (105) which comprises more than 60 per cent by weight of alkyl polysiloxane D4,
(B) evaporating the liquid SiO$_2$ charging stock (105) in a gaseous SiO$_2$ charging vapour (107),
(C) evaporating a liquid TiO$_2$ charging stock (205) in a gaseous TiO$_2$ charging vapour (207),
(D) converting the SiO$_2$ charging vapour (107) and the TiO$_2$ charging vapour into SiO$_2$ particles and TiO$_2$ particles,
(E) separating the SiO$_2$ particles and the TiO$_2$ on a deposition surface (160) under formation of a titanium-doped SiO$_2$ soot body (200),
(F) vitrifying the titanium-doped SiO$_2$ soot body under formation of the synthetic quartz glass, wherein the TiO$_2$ concentration in the synthetic quartz glass is between 5 per cent by weight and 11 per cent by weight,

**characterised in that**

the liquid SiO$_2$ charging stock (105) has at least one additional component from the alkyl polysiloxane D3 having a weight component of mD3 and an additional component from the alky polysiloxane D5 having a weight component of mD5 with a weight ratio of mD3/mD5 in a range between 0.01 and 1, and
the provided liquid $SiO_2$ charging stock (105) is evaporated into the gaseous $SiO_2$ charging vapour (107) while maintaining the weight ratio of mD3/mD5 and at least at 99 per cent by weight, and
the additional components comprise alkyl polycyclosiloxanes and the linear homologues thereof in the following quantities:

> - hexamethylcyclotrisiloxane (D3): weight component mD3 in a range between 0.02 per cent by weight and 2 per cent by weight,
> - decamethylcyclopentasiloxane (D5): weight component mD5 in a range between 0.5 per cent by weight and 10 per cent by weight.

2. The method in accordance with Claim 1, **characterised in that** evaporating comprises the steps of:

> • heating the $TiO_2$ charging stock (205),
> • inserting the heated $TiO_2$ charging stock (205) into an expansion chamber (125) so that at least a first part of the $TiO_2$ charging stock (205) evaporates as a result of a drop in pressure.

3. The method in accordance with at least any one of the preceding claims, **characterised in that** evaporating comprises the steps of:

> • heating the $TiO_2$ charging stock (205),
> • inserting the heated $TiO_2$ charging stock (205) into an expansion chamber (125),
> • mixing the $TiO_2$ charging stock (205) with a heated diluting agent (152) so that at least a second part of the $TiO_2$ charging stock (205) evaporates as a result of a lowering of the dew point.

4. The method in accordance with any one of Claims 2 or 3, **characterised in that**, as a result of the drop in pressure and/or the lowering of the dew point, the $TiO_2$ charging stock (205) is transferred into the $TiO_2$ charging vapour (207) for at least 99.95 per cent by weight, more preferably 99.9995 per cent by weight.

5. The method in accordance with at least any one of the preceding claims, **characterised in that** the $TiO_2$ concentration in the synthetic quartz glass is between 7 per cent by weight and 10 per cent by weight, more particularly between 7.8 per cent by weight and 8.9 per cent by weight.

6. The method in accordance with at least any one of the preceding claims, **characterised in that** the $Ti^{3+}$ concentration in the synthetic quartz glass is between 1 ppm and 200 ppm, more particularly between 1 ppm and 50 ppm, more preferably between 1 ppm and 20 ppm.

7. The method in accordance with at least any one of the preceding claims, **characterised in that** a variation of $\Delta Ti^{3+}/Ti^{3+}$ of the $Ti^{3+}$ concentration in the synthetic quartz glass on an optically used surface is 0.8 or less, more particularly between 0.0002 and 0.5.

8. The method in accordance with at least any one of the preceding claims, **characterised in that** the internal transmission is at least 80 per cent, more particularly at least 90 per cent at a length of path of 1 mm within a wavelength range from 400 nm to 700 nm.

9. The method in accordance with at least any one of the preceding claims, **characterised in that** a fictitious temperature of the synthetic quartz glass is no more than 1,050 °C, more preferably no more than 1,000 °C, most preferably no more than 950 °C.

10. The method in accordance with at least any one of the preceding claims, **characterised in that**, inside a temperature window from 0 °C to 100 °C, the coefficient of thermal expansion is no more than 0 $\pm$ 150 ppb/°C.

11. The method in accordance with at least one of the preceding claims, **characterised in that** the titanium-doped $SiO_2$ soot body is doped with fluorine.

12. The method in accordance with the preceding Claim 11, **characterised in that** the concentration of fluorine in the synthetic quartz glass is at least 100 ppm by weight.

13. The method in accordance with at least any one of the preceding claims, **characterised in that** the alkyl polysiloxane D3 having the weight component of mD3 and the liquid $TiO_2$ charging stock (205) having a weight component of $mTiO_2$ are evaporated at a weight ratio of $mTiO_2$/mD3 within a range from 0.1 to 10.

14. The method in accordance with at least any one of the preceding claims, **characterised in that** the liquid $TiO_2$ charging stock (205) has at least 80 per cent by weight of titanium isopropoxide (Ti{OCH(CH3)2}4).

**Revendications**

1. Procédé de fabrication de verre de quartz synthétique dopé au titane, comprenant les étapes de procédé :

> (A) mise à disposition d'une matière de charge de $SiO_2$ liquide (105) qui présente plus de 60 % en poids du polyalkylsiloxane D4,

(B) évaporation de la matière de charge de SiO$_2$ liquide (105) en une vapeur de charge de SiO$_2$ gazeuse (107),

(C) évaporation d'une matière de charge de TiO$_2$ liquide (205) en une vapeur de charge de TiO$_2$ gazeuse (207),

(D) conversion de la vapeur de charge de SiO$_2$ (107) et de la vapeur de charge de TiO$_2$ en particules de SiO$_2$ et particules de TiO$_2$,

(E) dépôt de la particule de SiO$_2$ et de la particule de TiO$_2$ sur une surface de dépôt (160) en formant un corps de suie de SiO$_2$ (200) dopé au titane,

(F) vitrification du corps de suie de SiO$_2$ dopé au titane en formant le verre de quartz synthétique, dans lequel la concentration en TiO$_2$ dans le verre de quartz synthétique se situe entre 5 % en poids et 11 % en poids,

**caractérisé en ce que**

la matière de charge de SiO$_2$ liquide (105) présente au moins un composant supplémentaire constitué du polyalkylsiloxane D3 avec une proportion pondérale mD3 et un composant supplémentaire constitué du polyalkylsiloxane D5 avec une proportion pondérale mD5 dans un rapport pondéral mD3/mD5 dans une plage comprise entre 0,01 et 1, et

la matière de charge de SiO$_2$ liquide (105) mise à disposition est évaporée en conservant le rapport pondéral mD3/mD5 et à au moins 99 % en poids en la vapeur de charge de SiO$_2$ gazeuse (107), et les composants supplémentaires comprennent des polyalkylcyclosiloxanes et à chaque fois leurs homologues linéaires en les quantités suivantes :

- hexaméthylcyclotrisiloxane (D3) : proportion pondérale mD3 dans la plage comprise entre 0,02 % en poids et 2 % en poids,
- décaméthylcyclopentasiloxane (D5) proportion pondérale mD5 dans la plage comprise entre 0,5 % en poids et 10 % en poids.

2. Procédé selon la revendication 1, **caractérisé en ce que** l'évaporation comprend les étapes :

• chauffage de la matière de charge de TiO$_2$ (205),
• introduction de la matière de charge de TiO$_2$ chauffée (205) dans une chambre d'expansion (125) de sorte qu'au moins une première partie de la matière de charge de TiO$_2$ (205) s'évapore suite à une chute de pression.

3. Procédé selon au moins une des revendications précédentes, **caractérisé en ce que** l'évaporation comprend les étapes :

• chauffage de la matière de charge de TiO$_2$ (205),
• introduction de la matière de charge de TiO$_2$ chauffée (205) dans une chambre d'expansion (125),
• mélange de la matière de charge de TiO$_2$ (205) avec un diluant chauffé (152) de sorte qu'au moins une seconde partie de la matière de charge de TiO$_2$ (205) s'évapore suite à une baisse du point de condensation.

4. Procédé selon une des revendications 2 ou 3, **caractérisé en ce que** la matière de charge de TiO$_2$ (205) est transformée en la vapeur de charge de TiO$_2$ (207) à au moins 99,95 % en poids, de préférence 99,9995 % en poids, suite à la chute de pression et/ou la baisse du point de condensation.

5. Procédé selon au moins une des revendications précédentes, **caractérisé en ce que** la concentration en TiO$_2$ dans le verre de quartz synthétique se situe entre 7 % en poids et 10 % en poids, notamment entre 7,8 % en poids et 8,9 % en poids.

6. Procédé selon au moins une des revendications précédentes, **caractérisé en ce que** la concentration en Ti$^{3+}$ dans le verre de quartz synthétique se situe entre 1 ppm et 200 ppm, notamment entre 1 ppm et 50 ppm, notamment entre 1 ppm et 20 ppm.

7. Procédé selon au moins une des revendications précédentes, **caractérisé en ce qu'**une variation $\Delta$Ti$^{3+}$/Ti$^{3+}$ de la concentration en Ti$^{3+}$ dans le verre de quartz synthétique sur une surface utilisée de manière optique est de 0,8 ou moins, notamment comprise entre 0,0002 et 0,5.

8. Procédé selon au moins une des revendications précédentes, **caractérisé en ce que** la transmission interne à 1 mm de trajet optique dans une plage de longueur d'onde de 400 nm à 700 nm se monte à au moins 80 %, notamment au moins 90 %.

9. Procédé selon au moins une des revendications précédentes, **caractérisé en ce qu'**une température fictive du verre de quartz synthétique se monte à 1050°C maximum, notamment 1000°C maximum, de manière particulièrement préférée 950°C maximum.

10. Procédé selon au moins une des revendications précédentes, **caractérisé en ce que** le coefficient de dilatation thermique dans une fenêtre de température de 0°C à 100°C se monte à 0 ± 150ppb/°C maximum.

11. Procédé selon au moins une des revendications précédentes, **caractérisé en ce que** le corps de suie

de SiO$_2$ dopé au titane est dopé avec du fluor.

12. Procédé selon la revendication précédente 11, **caractérisé en ce que** la concentration en fluor dans le verre de quartz synthétique se monte à au moins 100 ppm en poids.

13. Procédé selon au moins une des revendications précédentes, **caractérisé en ce que** le polyalkylsiloxane D3 avec la proportion pondérale mD3 et la matière de charge de TiO$_2$ liquide (205) avec une proportion pondérale mTiO$_2$ sont évaporés dans un rapport pondéral mTiO$_2$/mD3 dans une plage comprise entre 0,1 et 10.

14. Procédé selon au moins une des revendications précédentes, **caractérisé en ce que** la matière de charge de TiO$_2$ liquide (205) présente au moins 80 % en poids d'isopropoxyde de titane (Ti{OCH(CH3)2}4).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5970751 A
- US 5879649 A
- WO 2013076195 A1
- WO 9954259 A1
- EP 14705732 A